# FASCICULE DE BREVET EUROPEEN

(11) **EP 2 459 759 B1**
(45) Date de publication et mention de la délivrance du brevet: **10.12.2014**
(21) Numéro de dépôt: 10736716.1
(22) Date de dépôt: 26.07.2010
(51) Int. Cl.: C22B 3/00, C22B 60/02, G21C 19/46, G21F 9/12, C01G 56/00

(54) **PROCEDE DE RECUPERATION SELECTIVE DE L'AMERICIUM A PARTIR D'UNE PHASE AQUEUSE NITRIQUE**
VERFAHREN FÜR DIE SELEKTIVE RÜCKGEWINNUNG VON AMERICUM AUS EINER WÄSSRIGEN STICKSTOFFPHASE
METHOD FOR SELECTIVELY RECOVERING AMERICIUM FROM AN AQUEOUS NITRIC PHASE

(30) Priorité: 27.07.2009 FR 0955239
(43) Date de publication de la demande: 06.06.2012
(73) Titulaire: Commissariat à l'Énergie Atomique et aux Énergies Alternatives, 75015 Paris (FR); Areva NC, 75009 Paris (FR)
(72) Inventeur: HERES, Xavier, F-84000 Avignon (FR); BARON, Pascal, F-30200 Bagnols-sur-Ceze (FR); SOREL, Christian, F-30400 Villeneuve Les Avignon (FR); HILL, Clément, F-30290 Saint Victor La Coste (FR); BERNIER, Gilles, F-84000 Avignon (FR)
(74) Mandataire: Ilgart, Jean-Christophe
(86) Numéro de dépôt international: PCT/EP2010/060770
(87) Numéro de publication internationale: WO 2011/012563

(56) Documents cités:
- WO-A-2008/088576
- US-A1- 2007 009 410
- US-B2- 7 157 003
- MADIC ET AL: "Futuristic back-end of the nuclear fuel cycle with the partitioning of minor actinides" JOURNAL OF ALLOYS AND COMPOUNDS, ELSEVIER SEQUOIA, LAUSANNE, CH, vol. 444-445, 27 août 2007 (2007-08-27), pages 23-27, XP022215233 ISSN: 0925-8388

## Description

### DOMAINE TECHNIQUE

La présente invention se rapporte à un procédé qui permet de récupérer sélectivement l'américium à partir d'une phase aqueuse nitrique contenant de l'américium, du curium et des produits de fission dont des lanthanides, mais qui est exempte d'uranium, de plutonium et de neptunium ou qui ne contient ces trois derniers éléments qu'à l'état de traces.

Ce procédé trouve des applications dans le domaine du traitement et du recyclage des combustibles nucléaires irradiés où il présente un intérêt tout particulier pour épurer en américium des raffinats issus de procédés d'extraction et de purification de l'uranium et du plutonium comme les procédés PUREX et COEX™.

### ÉTAT DE LA TECHNIQUE ANTÉRIEURE

Les procédés, qui permettent d'extraire et de purifier l'uranium et le plutonium présents dans des liqueurs de dissolution de combustibles nucléaires irradiés comme le procédé PUREX (qui est actuellement utilisé dans les usines de traitement des combustibles nucléaires irradiés) et le procédé COEX™ (qui est décrit dans la demande internationale PCT WO 2007/135178, **[1]**), génèrent des effluents auxquels on donne le nom de raffinats.

Ces raffinats sont des solutions aqueuses à forte acidité nitrique, typiquement de 2 à 5 M, qui contiennent de l'américium, du curium, des lanthanides comme le lanthane, le cérium, le praséodyme, le néodyme, le samarium et l'europium, des produits de fission autres que les lanthanides comme le molybdène, le zirconium, le rubidium, le ruthénium, le rhodium, le palladium et l'yttrium, ainsi que d'autres éléments métalliques qui ne sont ni des lanthanides, ni des produits de fission comme le fer et le chrome.

L'américium est le principal contributeur à la radioactivité résiduelle après 300 ans des déchets issus du conditionnement de ces raffinats (notamment par vitrification). A titre d'illustration, le temps nécessaire pour que cette radioactivité revienne à un niveau du même ordre que celle de l'uranium naturel utilisé pour fabriquer des combustibles nucléaires est d'une dizaine de milliers d'années.

La récupération sélective de l'américium présent dans les raffinats issus des procédés PUREX et COEX™, avant que ceux-ci ne soient envoyés à la vitrification, permettrait de réduire significativement la charge thermique des déchets vitrifiés et, par là même, l'emprise au stockage de ces déchets.

Dans le combustible irradié, après 5 ans de refroidissement, le curium est à 90% sous la forme Cm-244, ayant 18 ans de période radioactive. Les autres isotopes Cm-243, Cm-245, Cm-246, de période supérieure à 30 ans ne représentent qu'environ 10% de l'isotopie du curium. Le curium étant un émetteur neutronique, rendant sa manipulation délicate et puisque le Cm-244 conduit à du Pu-239 par décroissance avec une période inférieure à 30 ans, il s'avère plus avantageux de ne pas directement recycler le curium avec l'américium.

Pour récupérer l'américium à partir d'une phase aqueuse, il a été proposé un certain nombre de procédés.

Il s'agit notamment du procédé SESAME.

Ce procédé, qui est décrit dans le brevet français n° 2 731 717, **[2],** prévoit d'oxyder par voie électrochimique l'américium - qui est stable en solution aqueuse au degré d'oxydation III - en américium(VI) en utilisant, d'une part, un médiateur électrochimique dont le rôle est de favoriser la formation de l'américium(VI) et, d'autre part, un complexant dont le rôle est de stabiliser l'américium (VI) en solution aqueuse. L'américium hexavalent peut alors être extrait sélectivement de la phase aqueuse dans laquelle il se trouve par une phase organique contenant un extractant solvatant comme le phosphate de tri-n-butyle (ou TBP), ou un extractant acide comme l'acide bis-(2-éthylhexyl)phosphorique (ou HDEHP).

L'utilisation du procédé SESAME pour récupérer sélectivement l'américium à partir de raffinats issus des procédés PUREX et COEX™ n'est pas envisageable pour la simple raison que la présence de produits de fission oxydables altère significativement le rendement d'oxydation électrochimique de l'américium et, donc, le rendement d'extraction de cet élément par la phase organique. C'est d'ailleurs la raison pour laquelle ce procédé a été proposé et utilisé jusqu'à présent pour traiter des solutions aqueuses ne contenant plus que de l'américium, du curium et éventuellement des lanthanides comme celles issues des procédés SANEX et DIAMEX.

Il s'agit, par ailleurs, du procédé TALSPEAK.

Ce procédé, qui est décrit par B. Weaver et F. A. Kappelmann dans le Rapport ORNL-3559, 1964, [3], prévoit de réaliser une partition américium/curium après avoir séparé ces deux éléments des lanthanides et autres produits de fission. Pour ce faire, il utilise une phase organique constituée d'un mélange TBP/HDEHP dans un diluant aromatique du type toluène ou diisopropylbenzène, et une phase aqueuse contenant un mélange acide polyaminocarboxylique/acide hydroxycarboxylique et dont le pH est ajusté à une valeur de 2 à 3 par addition d'une base.

Appliqué au traitement d'un raffinat issu d'un procédé PUREX ou COEX™, le procédé TALSPEAK nécessiterait de réduire l'acidité de ce raffinat de sorte à ramener son pH à une valeur supérieure à 1 avec, à la clé, un risque non négligeable d'hydrolyse des produits de fission présents dans le raffinat, pouvant conduire à la formation de produits insolubles contenant, par exemple, du zirconium, du molybdène ou du ruthénium.

De plus, dans le procédé TALSPEAK, la séparation de l'américium et du curium des produits de fission ne peut être obtenue qu'avec une phase organique comprenant un diluant aromatique, alors que les procédés PUREX et COEX™ utilisent un diluant aliphatique.

Il en résulte que la mise en oeuvre du procédé TALSPEAK en aval d'un procédé PUREX ou COEX™ n'est pas non plus envisageable.

Il s'agit, en outre, du procédé ALINA.

Ce procédé, qui est décrit dans la demande de brevet US n° 2007/0009410, [4], prévoit d'extraire l'américium d'une phase aqueuse contenant du curium et éventuellement d'autres éléments comme des lanthanides, en utilisant une phase organique constituée d'un mélange synergique acide (chlorophényl)dithiophos-phinique/tri(éthylhexyl)phosphate ou acide (chlorophényl)dithiophosphinique/oxyde de trialkylphosphine dans du *i*-octane et du t-butylbenzène. La sélectivité de ce mélange serait suffisante pour extraire sélectivement l'américium à partir d'une phase aqueuse contenant de 0,1 à 0,5 mole/L d'acide nitrique.

L'application de ce procédé au traitement d'un raffinat issu d'un procédé PUREX ou COEX™ nécessiterait, comme dans le cas du procédé TALSPEAK, de réduire la teneur en acide nitrique de ce raffinat de manière à la ramener à une valeur maximale de 0,5 mole/L si l'on veut obtenir des performances d'extraction et de séparation suffisantes, avec, là également, un risque d'hydrolyse des produits de fission présents dans le raffinat et, donc, de formation de produits insolubles.

Par ailleurs, la phase organique utilisée dans le procédé ALINA peut extraire fortement certains produits de fission comme le zirconium, le molybdène, le ruthénium et le palladium, ce qui a pour effet de diminuer la capacité de charge et le pouvoir extractant de cette phase vis-à-vis de l'américium et surtout de compliquer notablement le procédé si l'on veut ensuite récupérer l'américium seul dans une phase aqueuse appropriée.

En outre, la phase organique utilisée dans le procédé ALINA comprend quatre constituants dont l'un conduit à des produits de dégradation contenant des atomes de soufre ou de chlore, difficilement gérables dans un procédé industriel du domaine nucléaire en raison du risque de formation d'acide sulfurique ou chlorhydrique. La présence de ces quatre constituants complique considérablement le traitement de la phase organique dégradée qui n'a, d'ailleurs, pas fait l'objet d'études à ce jour.

Il s'agit, en outre, du procédé DIAMEX 2.

Ce procédé décrit dans [5], prévoit d'extraire l'américium d'une phase aqueuse contenant du curium en utilisant une phase organique constituée du malonamide DMDOHEMA dans le TPH. La sélectivité de cette molécule serait suffisante pour extraire, en milieu nitrique au moins 1,7 mol/L, l'américium à plus de 99% en laissant 99% du curium en phase aqueuse, d'après un essai mis en oeuvre sur une solution reconstituée en 2002. Si ce procédé présente l'intérêt de pouvoir traiter une solution fortement acide, il nécessite des cycles d'extraction en aval avec d'autres solutions organiques, pour obtenir *in fine* une solution aqueuse ne contenant que de l'américium et du curium, ce qui complique le schéma d'ensemble.

Il s'agit enfin du procédé DIAMEX-SANEX.

Ce procédé a été proposé dans le brevet français n° 2 845 616, [6] pour séparer les actinides de degré d'oxydation III, c'est-à-dire l'américium et le curium, des lanthanides en aval d'un procédé PUREX.

Ce procédé est basé sur l'utilisation de deux extractants opérant dans des domaines chimiques disjoints, à savoir : un premier extractant, de type solvatant, qui est apte à extraire conjointement les actinides(III) et les lanthanides d'une phase aqueuse à forte acidité nitrique, et un deuxième extractant, de type acide, qui est apte à extraire les lanthanides d'une phase aqueuse à faible acidité nitrique.

Ce procédé consiste schématiquement à coextraire les actinides(III) et les lanthanides de la phase aqueuse, fortement acide, dans laquelle ils se trouvent au moyen d'une phase organique contenant l'extractant solvatant puis, après avoir ajouté l'extractant acide à la phase organique, à désextraire les actinides(III) de cette phase organique au moyen d'une solution aqueuse faiblement acide. L'extractant acide permet alors de retenir les lanthanides dans la phase organique et d'éviter ainsi que ces derniers ne soient désextraits conjointement avec les actinides(III).

Or, il se trouve que, dans le cadre de leurs travaux, les Inventeurs ont constaté que, de manière surprenante, l'utilisation de deux extractants opérant dans des domaines chimiques disjoints peut aussi être mise à profit pour récupérer sélectivement l'américium à partir d'une phase aqueuse nitrique contenant, outre cet élément, du curium et des produits de fission dont des lanthanides, sous réserve de choisir convenablement, d'une part, le premier extractant et, d'autre part, certaines des conditions opératoires dans lesquelles cette utilisation est effectuée.

Et c'est sur cette constatation qu'est basée la présente invention.

### EXPOSÉ DE L'INVENTION

On rappelle que, dans le domaine des extractions liquide-liquide, c'est-à-dire utilisant la différence de solubilité des éléments chimiques que l'on cherche à séparer entre une phase aqueuse et une phase organique :
- le coefficient de distribution entre deux phases, organique et aqueuse, d'un élément métallique M, noté D_{M}, correspond au rapport entre la concentration (ou activité) que présente cet élément dans la phase organique et la concentration que présente ce même élément dans la phase aqueuse ;
- le facteur d'extraction d'un élément métallique M, noté E_{M}, correspond à O/A * D_{M}, c'est-à-dire au produit du rapport entre le volume ou le débit (si les phases mises en présence sont circulantes) de la phase organique et le volume ou le débit de la phase aqueuse par le coefficient de distribution D_{M} de ce même élément ; tandis que
- le facteur de séparation entre deux éléments métalliques M1 et M2, noté FS_{M1/M2} correspond à D_{M1}/D_{M2}, c'est-à-dire au rapport entre le coefficient de distribution de l'élément M1 et le coefficient de distribution de l'élément M2.

La présente invention a donc pour objet un procédé de récupération sélective de l'américium à partir d'une phase aqueuse A1 qui contient au moins 0,5 mole/L d'acide nitrique, de l'américium, du curium et des produits de fission dont des lanthanides, mais qui est exempte d'uranium, de plutonium et de neptunium ou qui ne contient ces trois derniers éléments qu'à l'état de traces, lequel procédé est caractérisé en ce qu'il comprend au moins les étapes :
a) l'extraction de l'américium et d'une partie des lanthanides de la phase aqueuse A1, par circulation de cette phase aqueuse dans un premier extracteur, à contre-courant d'une phase organique non miscible à l'eau, qui contient un extractant solvatant capable d'extraire davantage l'américium que le curium d'une phase aqueuse acide, et éventuellement un extractant acide, dans un diluant organique ;
b) le lavage de la phase organique issue de l'étape a), par circulation de cette phase organique dans un deuxième extracteur, à contre-courant d'une phase aqueuse A2 qui contient au moins 0,5 mole/L d'acide nitrique ;
c) éventuellement l'ajout à la phase organique issue de l'étape b) de l'extractant acide si celui-ci n'est pas déjà présent dans cette phase ;
d) la désextraction sélective de l'américium présent dans la phase organique issue de l'étape b) ou de l'étape c), par circulation de cette phase organique dans un troisième extracteur, à contre-courant d'une phase aqueuse A3 qui présente un pH au moins égal à 1 et qui contient un ou plusieurs agents complexants ; et
e) la désextraction des lanthanides présents dans la phase organique issue de l'étape c), par circulation de cette phase organique dans un quatrième extracteur, à contre-courant d'une phase aqueuse A4 qui contient moins de 1,5 mole/L d'acide nitrique ;
et en ce que le rapport entre les débits auxquels circulent la phase organique et la phase aqueuse A1 dans le premier extracteur et le rapport entre les débits auxquels circulent la phase organique et la phase aqueuse A2 dans le deuxième extracteur sont choisis de sorte que le facteur d'extraction de l'américium obtenu à chacune des étapes a) et b) soit supérieur à 1 et que le facteur d'extraction du curium obtenu à chacune des étapes a) et b) soit inférieur à 1.

Ainsi, dans le procédé de l'invention, on utilise un extractant solvatant et un extractant acide comme dans le procédé DIAMEX-SANEX, mais :
- d'une part, on choisit l'extractant solvatant parmi les extractants solvatants qui sont capables d'extraire davantage l'américium que le curium d'une phase aqueuse acide, c'est-à-dire ceux avec lesquels le coefficient de distribution de l'américium obtenu lors d'une extraction est toujours supérieur au coefficient de distribution du curium obtenu lors de la même irradiation et ce, quelles que soient les conditions opératoires dans lesquelles cette extraction est réalisée, et
- d'autre part, on règle les rapports entre les débits auxquels circulent les phases organique et aqueuse dans les extracteurs dévolus aux étapes a) et b) de sorte à obtenir, à chacune de ces étapes, un facteur d'extraction supérieur à 1 pour l'américium et un facteur d'extraction inférieur à 1 pour le curium,
ce qui permet de séparer ces deux éléments l'un de l'autre au cours desdites étapes a) et b), l'américium se retrouvant en phase organique tandis que le curium reste en phase aqueuse.

Conformément à l'invention, l'extractant solvatant peut notamment être choisi parmi :
- les malonamides comme le N,N'-diméthyl-N,N'-dibutyltétradécylmalonamide (ou DMDBTDMA), le N,N'-diméthyl-N,N'-dioctylhexyléthoxymalonamide (ou DMDOHEMA), le N,N'-diméthyl-N,N'-dioctyloctylmalonamide (ou DMDOOMA), le N,N'-diméthyl-N,N'-dioctylhexyl-malonamide (ou DMDOHMA) ou le N,N'-diméthyl-N,N'-dibutyldodécylmalonamide (ou DMDBDDEMA) ;
- les oxydes de carbamoylphosphine comme l'oxyde de diisobutylphényloctylcarbamoylméthyl-phosphine (ou CMPO) ;
- les sulfures de triisobutylphosphine ;
- les carbamoylphosphonates comme le dihexyl-N,N-diéthylcarbamoylméthylphosphonate (ou DHDECMP) ; et
- leurs mélanges.

L'extractant acide (ainsi dénommé car il présente une ou plusieurs fonctions acides) peut, lui, notamment être choisi parmi :
* les acides contenant du phosphore tels que les acides mono- et dialkylphosphoriques comme l'acide di(2-éthylhexyl)phosphorique (ou HDEHP), l'acide di(*n*-hexyl)phosphorique (ou HDHP), l'acide di(1,3-diméthylbutyl)phosphorique (ou HBDMBP) ou l'acide diisodécylphosphorique (ou DIDPA), les acides mono- et dialkylphosphoniques comme l'acide 2-éthylhexyl-2-éthylhexylphosphonique (ou HEHEHP), les acides mono- et dialkylphosphiniques, les acides thiophosphoriques, les acides thiophosphoniques et les acides thiophosphiniques ;
* les acides carboxyliques lipophiles ;
* les acides sulfoniques comme l'acide dinonylnaphtalène sulfonique (ou HDNNS) ; et
* leurs mélanges.

Quant au diluant organique, il peut être choisi parmi tous les diluants organiques polaires ou aliphatiques dont l'utilisation a été proposée pour la réalisation d'extractions liquide-liquide dans le domaine du traitement des combustibles nucléaires irradiés comme le toluène, le xylène, le t-butylbenzène, le triisopropylbenzène, le kérosène, les dodécanes, linéaires ou ramifiés, tels que le n-dodécane ou le tétrapropylène hydrogéné (ou TPH), l'isane, un hydrocarbure paraffinique normal (ou NPH), le métanitrobenzotrifluorure et le 5,5'-[oxybis-(méthylèneoxy)]bis(1,1,2,2,3,3,4,4-octafluoropentane).

Conformément à l'invention, on préfère ajouter aux phases aqueuses A1 et A2 un ou plusieurs agents complexants en vue :
- soit d'exalter le facteur de séparation entre l'américium et le curium, noté FS_{Am/Cm}, au cours des étapes a) et b) ;
- soit d'éviter la migration en phase organique de certains produits de fission qui ne sont pas des lanthanides mais qui sont susceptibles d'être extraits par l'extractant solvatant comme, par exemple, le palladium et le zirconium ;
- soit encore d'obtenir ces deux effets conjugués.

Ce ou ces agents complexants, qui doivent être capables, lorsqu'ils sont dans une phase aqueuse d'acidité élevée, c'est-à-dire en pratique de pH < 0, de complexer le curium préférentiellement à l'américium et/ou de complexer fortement les produits de fission que l'on ne veut pas voir migrer dans la phase organique, peuvent notamment être choisis parmi :
- les acides carboxyliques comme l'acide oxalique, l'acide malonique ou l'acide mésoxalique (encore connu sous le nom d'acide cétomalonique) ;
- les acides hydroxycarboxyliques comme l'acide glycolique, l'acide citrique ou l'acide tartrique ;
- les acides polyaminocarboxyliques comme l'acide N-(2-hydroxyéthyl)éthylène diamine triacétique (ou HEDTA), l'acide nitrilotriacétique (ou NTA) ou l'acide diéthylène triamine pentaacétique (ou DTPA) ;
- les acides pyridine polycarboxyliques comme l'acide dipicolinique (ou DPA, encore connu sous le nom d'acide 2,6-pyridine dicarboxylique) ;
- les diglycolamides comme le tétraéthyl-diglycolamide (ou TEDGA), le tétraméthyldiglycolamide (ou TMDGA) ou le tétrapropyldiglycolamide (ou TPDGA) ;
- les amines, les polyazines greffées de chaines alkyles comportant de 1 à 8 atomes de carbone, les hydroxyoximes, les acides hydroxamiques et les β-dicétones.

Comme précédemment indiqué, un ou plusieurs agents complexants sont également présents dans la phase aqueuse A3 que l'on utilise à l'étape d) pour désextraire sélectivement l'américium de la phase organique qui est issue soit de l'étape b) dans le cas où l'extractant acide est présent dans la phase organique dès l'étape a), soit de l'étape c) dans le cas contraire.

Ce ou ces agents complexants, qui doivent être capables, lorsqu'ils sont dans une phase aqueuse de faible acidité, c'est-à-dire en pratique de pH ≥ 1, de complexer l'américium préférentiellement aux lanthanides, peuvent notamment être choisis parmi :
* les acides carboxyliques comme l'acide oxalique, l'acide malonique ou l'acide mésoxalique ;
* les acides hydroxycarboxyliques comme l'acide glycolique, l'acide citrique ou l'acide tartrique ;
* les acides polyaminocarboxyliques comme l'HEDTA, le NTA ou le DTPA ;
* les acides pyridine polycarboxyliques comme le DPA ;
* les polypyridines hydrophiles ;
* les amines, les polyazines greffées de chaines alkyles comportant de 1 à 8 atomes de carbone.

La phase aqueuse A4 que l'on utilise au cours de l'étape e) pour désextraire les lanthanides de la phase organique peut être exempte de tout agent complexant, auquel cas il s'agit d'une simple solution d'acide nitrique dont l'acidité s'inscrit avantageusement dans la gamme d'acidités pour laquelle le pouvoir extractant de la phase organique est minimal vis-à-vis des lanthanides et de préférence à une concentration inférieure à 1,5 mole/L.

Toutefois, il est également possible d'ajouter à cette solution un ou plusieurs agents complexants du type acides carboxyliques, acides hydroxycarboxyliques, acides polyaminocarboxyliques, diglycolamides, acides sulfoniques, acides phosphoriques ou polyazines greffées de chaines alkyles comportant de 1 à 8 atomes de carbone, notamment si l'on souhaite aussi désextraire de la phase organique, à l'étape e), des éléments métalliques comme le zirconium et le fer qui, bien que n'étant pas des lanthanides, ont été extraits de la phase aqueuse A1 à l'étape a) et sont restés ensuite dans la phase organique.

Dans un premier mode de mise en oeuvre du procédé de l'invention, l'extractant acide n'est ajouté à la phase organique qu'après l'étape b).

L'étape a) est donc réalisée en utilisant une phase organique qui ne contient que l'extractant solvatant comme extractant, et le procédé comprend toutes les étapes a) à e).

Dans ce cas, l'étape c) est, de préférence, réalisée en faisant circuler dans le troisième extracteur une phase organique qui, non seulement contient le même extractant solvatant que celui présent dans la phase organique utilisée à l'étape a), à la même concentration et dans le même diluant organique, mais qui contient de plus l'extractant acide, cette phase venant s'ajouter, dans ledit troisième extracteur, à la phase organique issue de l'étape b).

Dans ce cas également, l'étape e) est, de préférence, suivie d'une étape additionnelle qui consiste à séparer l'extractant solvatant de l'extractant acide en vue de leur réutilisation ultérieure.

La séparation des deux extractants peut être réalisée par l'une quelconque des opérations décrites dans la référence **[6]** précitée, à savoir :
▪ par désextraction de l'un des deux extractants de la phase organique ;
▪ par distillation de l'extractant ayant le point de vaporisation le plus bas si les deux extractants ont des points de vaporisation suffisamment différents ;
▪ par solidification cryogénique de l'extractant ayant le point de solidification le plus haut si les deux extractants ont des points de solidification suffisamment éloignés l'un de l'autre ; ou encore
▪ par démixtion, c'est-à-dire en induisant la formation de deux phases organiques non miscibles l'une à l'autre, fortement enrichies chacune en l'un des deux extractants.

Conformément à l'invention, la séparation des deux extractants est, de préférence, réalisée par une opération conduisant au retrait de l'extractant acide de la phase organique issue de l'étape e) et au maintien de l'extractant solvatant dans cette phase.

En effet, dans la mesure où :
- d'une part, il est souhaitable que la mise en oeuvre industrielle du procédé de l'invention pour le traitement d'un raffinat se fasse sous la forme d'une succession de cycles permettant chacun de traiter un volume de ce raffinat,
- d'autre part, la phase organique comprend aussi un diluant organique, et où
- enfin, l'extractant solvatant et ce diluant sont destinés à être utilisés dès la première étape d'un cycle,
il est préférable qu'ils puissent rester associés l'un à l'autre du début à la fin de ce cycle.

Ceci permet de simplifier notablement la gestion du diluant organique, comparativement à une séparation des deux extractants qui conduirait au maintien de l'extractant acide dans la phase organique et qui imposerait de séparer secondairement cet extractant acide du diluant organique et de récupérer ce dernier pour y dissoudre à nouveau l'extractant solvatant.

Le retrait sélectif de l'extractant acide de la phase organique est, de préférence, réalisé par désextraction de cet extractant.

A l'issue de ce retrait, la phase organique est ensuite soumise à une étape de purification, laquelle peut comprendre, comme cela est bien connu en soi, un lavage de cette phase par une ou plusieurs phases aqueuses capables de désextraire les impuretés et les produits de dégradation qu'elle contient sans pour autant désextraire l'extractant solvatant, et une ou plusieurs opérations de filtration de la phase organique ainsi lavée si celle-ci renferme un précipité.

Avantageusement, la phase organique issue de cette purification est divisée en deux fractions : une première fraction qui est destinée à ne comprendre que l'extractant solvatant et le diluant organique en vue de sa réutilisation dans l'étape a) du cycle suivant, et une deuxième fraction dans laquelle on réextrait l'extractant acide en vue de sa réutilisation dans l'étape c) du cycle suivant.

Il est ainsi possible de limiter au mieux les volumes d'extractants consommés ainsi que les volumes d'effluents organiques produits et, par là même, d'abaisser les coûts d'exploitation du procédé.

Selon un deuxième mode de mise en oeuvre du procédé de l'invention, l'extractant acide est présent dans la phase organique dès l'étape a).

L'étape a) est donc réalisée en utilisant une phase organique qui contient à la fois l'extractant solvatant et l'extractant acide, et le procédé ne comprend ni l'étape c), ni l'étape de séparation des deux extractants.

Par contre, il comprend avantageusement, après l'étape e), une étape de purification de la phase organique pour éliminer de celle-ci les impuretés et les produits de dégradation qui s'y sont accumulés au cours des étapes précédentes et ce, en vue de sa réutilisation dans le cycle suivant.

Cette étape de purification peut, comme précédemment, comprendre une ou plusieurs opérations de lavage par des solutions aqueuses et éventuellement une ou plusieurs opérations de filtration.

Si ce deuxième mode de mise en oeuvre présente l'avantage de mettre en jeu moins d'opérations que le mode de mise en oeuvre précédent, il s'avère, toutefois, que certains éléments métalliques comme le molybdène, le zirconium et le fer, qui ne sont pas extractibles d'une phase aqueuse de forte acidité par une phase organique ne contenant qu'un extractant solvatant le deviennent lorsque cette phase organique contient aussi un extractant acide.

Il en résulte que la présence dans la phase organique de l'extractant acide dès l'étape a) conduit à ce que ces éléments métalliques soient extraits de la phase aqueuse A1 au cours de cette étape et à ce qu'ils se maintiennent dans la phase organique au cours de l'étape b).

Aussi, dans ce deuxième mode de mise en oeuvre, le procédé comprend-il avantageusement une étape additionnelle qui consiste à désextraire sélectivement de la phase organique le molybdène, par exemple au moyen d'une phase aqueuse de faible acidité, c'est-à-dire typiquement de pH 3, et contenant un agent complexant capable de complexer sélectivement le molybdène tel que l'acide citrique.

Cette étape additionnelle est, de préférence, réalisée entre l'étape b) et l'étape d), l'étape c) étant inexistante dans ce cas.

Comme précédemment indiqué, le zirconium et le fer peuvent, quant à eux, être désextraits de la phase organique à l'étape e), conjointement avec les lanthanides, par addition à la phase aqueuse A4 d'un ou plusieurs agents complexants judicieusement choisis.

Conformément à l'invention, on préfère utiliser :
- un malonamide en tant qu'extractant solvatant comme le DMDOHEMA, en raison de l'aptitude particulièrement prononcée que présente ce type d'extractant à extraire davantage l'américium que le curium d'une phase aqueuse de forte acidité nitrique ;
- un acide contenant du phosphore en tant qu'extractant acide et, plus spécialement, un acide dialkylphosphorique comme l'HDHP ou l'HDEHP, notamment dans le cas où l'extractant acide est présent dans la phase organique dès l'étape a) ; en effet, ce type d'extractant est alors capable de jouer un rôle de modificateur de phase et d'élever significativement la valeur d'acidité de la phase A1 pour laquelle une démixtion (c'est-à-dire l'apparition d'une troisième phase consécutive à une saturation en espèces métalliques de la phase organique) est susceptible de se produire et, par là même, la capacité de charge de la phase organique ; et
- un diluant aliphatique en tant que diluant organique et, plus spécialement, le TPH qui est le diluant utilisé dans le procédé PUREX actuellement mis en oeuvre dans les usines de traitement des combustibles nucléaires irradiés.

On préfère, par ailleurs, que la phase aqueuse A1 ait une teneur en acide nitrique de 2 à 6 moles/L et contienne un ou plusieurs agents complexants que l'on choisit, de préférence, parmi les acides hydroxycarboxyliques, les acides polyaminocarboxyliques et les diglycolamides, l'utilisation d'un diglycolamide hydrophile comme le TEDGA, étant particulièrement préférée.

En effet, parce qu'ils complexent beaucoup plus fortement le curium que l'américium en phase aqueuse nitrique, les diglycolamides hydrophiles permettent d'exalter significativement le facteur de séparation entre l'américium et le curium, FS_{Am}/_{Cm}, à l'étape a). Ils permettent, en outre, d'exalter également les facteurs de séparation entre l'américium et les lanthanides lourds comme le samarium, l'europium et le gadolinium, entre l'américium et l'yttrium et entre l'américium et le zirconium.

Avantageusement, le diglycolamide présent dans la phase aqueuse A1 est associé à un acide polyaminocarboxylique comme l'HEDTA ou le DTPA, qui permet, lui, d'inhiber l'extraction du palladium par la phase organique.

Toutefois, la phase aqueuse A1 peut également contenir en tant qu'agent complexant, un acide carboxylique comme l'acide oxalique, qui permet, lui, d'inhiber l'extraction du molybdène, du zirconium et du fer dans le cas où la phase organique ne contient pas l'acide dialkylphosphorique dès l'étape a).

Concernant la phase aqueuse A2, on préfère utiliser une solution ayant une teneur en acide nitrique de 2 à 6 moles/L et contenant, de préférence, le ou les mêmes agents complexants que ceux présents dans la phase aqueuse A1, dans les mêmes gammes de concentrations.

La phase aqueuse A3 est, elle, de préférence, une solution contenant un acide polyaminocarboxylique comme l'HEDTA ou le DTPA, ainsi qu'un acide carboxylique ou hydroxycarboxylique capable de jouer à la fois le rôle d'agent complexant et celui de tampon comme l'acide glycolique, et dont le pH est ajusté à une valeur de 2 à 4 par l'addition d'une base du type hydroxyde comme la soude ou l'hydrazine, du type carbonate comme le carbonate de sodium, ou encore du type amine ou hydroxylamine.

Quant à la phase aqueuse A4, on utilise, de préférence une solution contenant de 0,5 à 1,5 mole/L d'acide nitrique et un diglycolamide comme le TEDGA, seul ou en association avec un acide carboxylique comme l'acide oxalique.

Conformément à l'invention, le rapport entre les débits auxquels circulent la phase organique et la phase aqueuse A1 dans le premier extracteur et le rapport entre les débits auxquels circulent la phase organique et la phase aqueuse A2 dans le deuxième extracteur sont, de préférence, choisis de sorte que le facteur d'extraction de l'américium obtenu à chacune des étapes a) et b) soit supérieur ou égal à 1,40 et que le facteur d'extraction du curium obtenu à chacune des étapes a) et b) soit, lui, inférieur ou égal à 0,90.

Il est ainsi possible de diminuer le nombre d'étages que doivent comporter les extracteurs dans lesquels sont réalisées les étapes a) et b) pour obtenir une séparation satisfaisante de l'américium et du curium au cours de ces étapes.

Le procédé selon l'invention présente de nombreux avantages. En particulier :
- il permet de récupérer l'américium à partir d'une phase aqueuse nitrique avec un taux de récupération au moins égal à 99,90%, voire de 99,95% ;
- il ne met en jeu aucune réaction d'oxydoréduction de l'américium ou d'un quelconque autre élément métallique et ne comprend donc aucun des inconvénients liés à une telle réaction ;
- la phase organique qu'il utilise ne comprend aucun constituant susceptible de conduire à des produits de dégradation chlorés, difficiles à gérer dans le domaine nucléaire ;
- la phase organique peut comprendre un diluant aliphatique ; et
- il peut être appliqué au traitement de phases aqueuses d'acidité nitrique élevée sans qu'il soit nécessaire de réduire l'acidité de ces phases.

Pour toutes ces raisons, il présente un intérêt tout particulier pour épurer en américium des raffinats issus de procédés d'extraction et de purification de l'uranium et du plutonium comme les procédés PUREX et COEX™.

D'autres caractéristiques et avantages du procédé de l'invention ressortiront des exemples qui suivent, qui se rapportent à des exemples de mise en oeuvre de ce procédé et qui se réfèrent aux figures annexées.

Il va de soi que ces exemples ne sont donnés qu'à titre d'illustrations de l'objet de l'invention et ne doivent en aucun cas être interprétés comme une limitation de cet objet.

### BRÈVE DESCRIPTION DES FIGURES

La figure 1 est un schéma de principe d'un premier exemple de mise en oeuvre du procédé de l'invention.
La figure 2 est un schéma de principe d'un deuxième exemple de mise en oeuvre du procédé de l'invention.

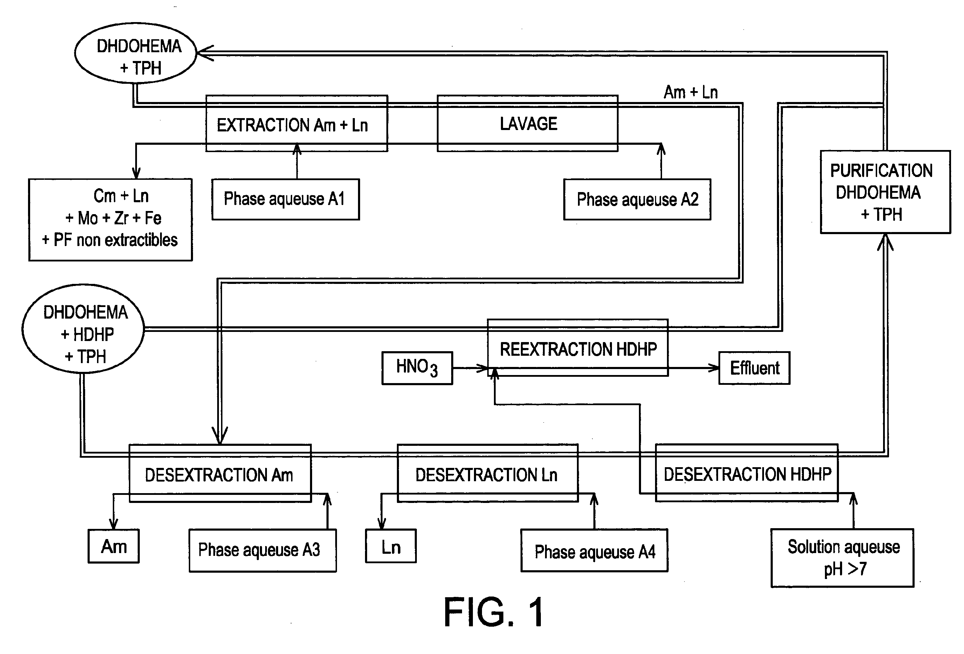

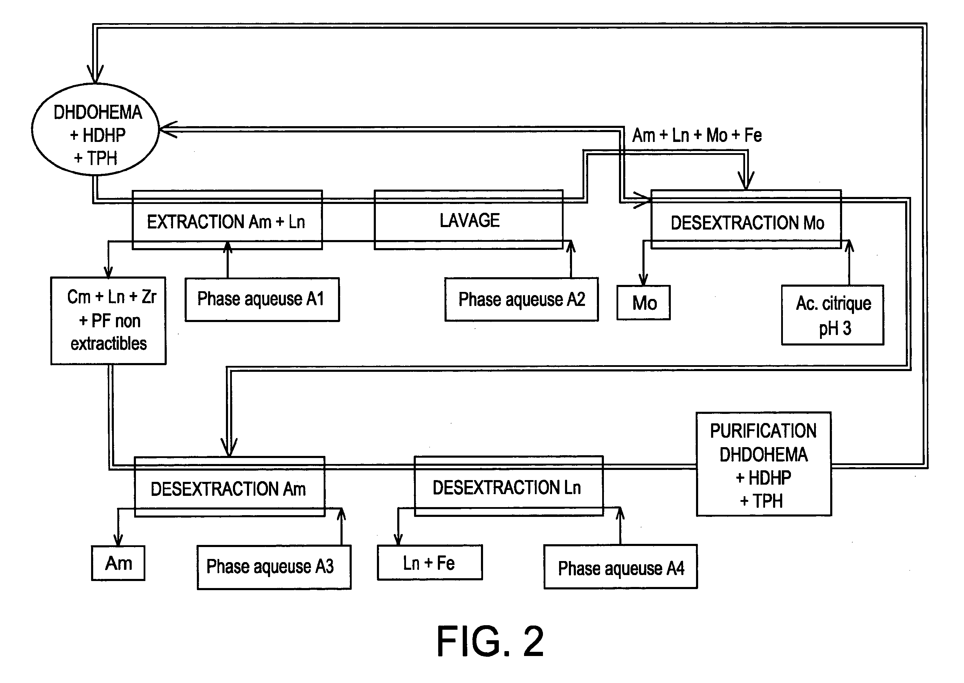

Dans les exemples de mises en oeuvre représentés sur les figures 1 et 2, toutes les opérations d'extraction, de lavage, de désextraction et de réextraction sont réalisées dans des extracteurs multiétagés du type mélangeurs-décanteurs, colonnes pulsées ou extracteurs centrifuges.

Les flux de phase organique entrant ou sortant de ces appareils sont symbolisés par un double trait continu, tandis que les flux de phase aqueuse entrant ou sortant desdits appareils sont symbolisés par un simple trait continu.

### EXPOSÉ DÉTAILLÉ DE L'INVENTION

### EXEMPLE 1 : Exposé détaillé d'un premier exemple de mise en oeuvre du procédé de l'invention

On se réfère à la figure 1 qui illustre schématiquement un premier exemple de mise en oeuvre du procédé de l'invention, conçu pour traiter, à une échelle industrielle, un raffinat issu du premier cycle de purification d'un procédé PUREX ou COEX™ en vue de récupérer sélectivement l'américium présent dans ce raffinat.

Ce dernier, dénommé ci-après et sur la figure 1 phase aqueuse A1, consiste en une solution aqueuse de forte acidité nitrique, qui contient de l'américium, du curium, des lanthanides (La, Ce, Pr, Nd, Sm, Eu, Gd, ...), des produits de fission autres que les lanthanides (Mo, Zr, Ru, Rd, Pa, Y, ...) ainsi que d'autres éléments métalliques qui ne sont ni des lanthanides ni des produits de fission comme le fer et le chrome.

Il est, par contre, exempt d'uranium, de plutonium et de neptunium ou, si l'un quelconque de ces éléments est présent, il ne l'est qu'à l'état de traces, c'est-à-dire à une teneur massique inférieure à environ 0,30%.

Dans ce premier exemple, le procédé est mis en oeuvre sous la forme d'une succession de cycles comprenant chacun les huit étapes suivantes :
1) l'extraction de l'américium et d'une partie des lanthanides présents dans la phase aqueuse A1 par une phase organique ne contenant, comme extractant, qu'un extractant solvatant ;
2) le lavage de la phase organique issue de cette extraction ;
3) l'ajout d'un extractant acide à la phase organique issue de ce lavage ;
4) la désextraction sélective de l'américium de la phase organique ainsi enrichie en extractant acide ;
5) la désextraction des lanthanides présents dans la phase organique issue de la désextraction de l'américium ;
6) la désextraction de l'extractant acide de la phase organique issue de la désextraction des lanthanides ;
7) la purification de la phase organique ne contenant plus, comme extractant, que l'extractant solvatant ; et
8) la réextraction de l'extractant acide dans une fraction de la phase organique ainsi purifiée.

Dans la première étape (dénommée « Extraction Am + Ln » sur la Figure 1), la phase aqueuse est mise à circuler dans un premier extracteur, à contre-courant d'une phase organique, non miscible à l'eau, qui contient un extractant solvatant capable d'extraire plus fortement l'américium que le curium d'un milieu nitrique concentré, dans un diluant organique.

Cet extractant solvatant est, de préférence, un malonamide, en l'espèce du DMDOHEMA, que l'on utilise à une concentration typiquement de 0,5 à 0,7 mole/L, par exemple de 0,65 mole/L.

Le diluant organique est du TPH.

Avant ou lors de son introduction dans le premier extracteur, l'acidité nitrique de la phase aqueuse A1 est, si nécessaire, rectifiée de manière à ce qu'elle se situe, de préférence, entre 3 et 5 moles/L, par exemple à 4 moles/L.

Par ailleurs, la phase aqueuse A1 est additionnée de deux agents complexants, à savoir un acide polyaminocarboxylique, en l'espèce de l'HEDTA, à une concentration typiquement de 0,01 à 0,1 mole/L, et de l'acide oxalique à une concentration typiquement de 0,01 à 0,5 mole/L.

Dans la deuxième étape (dénommée « Lavage » sur la figure 1), la phase organique issue du premier extracteur est mise à circuler dans un deuxième extracteur, à contre-courant d'une phase aqueuse A2 contenant typiquement de 2 à 3 moles/L d'acide nitrique, par exemple 2,4 moles/L, et les mêmes agents complexants, dans les mêmes gammes de concentrations, que la phase aqueuse A1.

En choisissant convenablement les rapports entre les débits auxquels circulent les phases organique et aqueuse dans chacun des premier et deuxième extracteurs et le nombre d'étages de ces extracteurs (voir exemple 3), on obtient ainsi, à l'issue de cette deuxième étape, une phase organique dans laquelle se trouvent la totalité ou la quasi totalité de l'américium, une partie du cérium et du praséodyme ainsi que de très faibles quantités de lanthane, de samarium et de néodyme, et une phase aqueuse dans laquelle se trouvent la totalité ou la quasi totalité du curium, le reste du cérium, du praséodyme, du lanthane, du samarium et du néodyme, ainsi que la totalité de tous les autres éléments métalliques qui étaient présents dans la phase aqueuse A1.

La phase aqueuse issue de cette deuxième étape est renvoyée vers le premier extracteur où elle rejoint la phase aqueuse A1 et s'ajoute à elle, tandis que la phase organique est dirigée vers un troisième extracteur dans lequel sont réalisées simultanément la troisième étape et la quatrième étape (dénommée « Désextraction Am » sur la figure 1).

En effet, dans le troisième extracteur, la phase organique est :
- d'une part, additionnée d'une phase organique de même composition que celle utilisée pour réaliser la première étape mais qui contient, en plus, un extractant acide, en l'espèce de l'HDHP, à une concentration typiquement de 0,1 à 0,5 mole/L, par exemple de l'ordre de 0,3 mole/L ; et
- d'une part, mise à circuler à contre-courant d'une phase aqueuse A3 pour désextraire sélectivement l'américium.

Cette phase aqueuse contient un acide polyaminocarboxylique, en l'espèce du DTPA, à une concentration typiquement de 0,01 à 0,1 mole/L, ainsi qu'un acide carboxylique ou hydroxycarboxylique capable de jouer à la fois le rôle d'agent complexant et celui de tampon, en l'espèce de l'acide glycolique, à une concentration typiquement de 0,1 à 1 mole/L.

Son pH est, de préférence, ajusté à une valeur comprise entre 2 et 4, par exemple de 3, par l'addition d'une base comme la soude.

A l'issue de quoi, on obtient une phase aqueuse qui ne contient, comme élément métallique, que de l'américium et une phase organique dans laquelle se trouvent le cérium, le praséodyme, le lanthane, le samarium et le néodyme ayant été partiellement extraits au cours de la première étape.

Dans la cinquième étape (dénommée « Désextraction Ln » sur la figure 1), la phase organique est mise à circuler dans un quatrième extracteur, à contre-courant d'une phase aqueuse A4 qui contient typiquement de 0,5 à 1 mole/L d'acide nitrique et, éventuellement, un diglycolamide, à une concentration typiquement de 0,01 à 0,5 mole/L.

On obtient ainsi, à l'issue de cette cinquième étape, une phase organique qui ne contient plus aucun des éléments métalliques dont elle s'était chargée au cours de la première étape mais qui renferme, outre l'extractant solvatant et l'extractant acide, un certain nombre d'impuretés et de produits de dégradation, notamment de radiolyse, qui se sont accumulés au cours des étapes précédentes.

Dans la sixième étape (dénommée « Désextraction HDHP » sur la figure 1), la phase organique est mise à circuler, dans un cinquième extracteur, à contre-courant d'une solution aqueuse de pH supérieur à 7, par exemple une solution d'un hydroxyde comme la soude ou l'hydrazine, d'un carbonate comme le carbonate de sodium, d'une amine ou d'une hydroxylamine.

Puis, dans la septième étape (dénommée « Purification DMDOHEMA + TPH » sur la figure 1), la phase organique, ainsi déchargée de l'HDHP, est mise à circuler dans un sixième extracteur, à contre-courant d'une solution aqueuse d'une base forte ou d'un sel d'une base forte, de pH au moins égal à 8, comme une solution de soude ou de carbonate de sodium, et est éventuellement soumise à une ou plusieurs filtrations si elle renferme un précipité.

Dans la huitième étape (dénommée « Réextraction HDHP » sur la figure 1), la phase organique ainsi purifiée est divisée en deux fractions : une première fraction représentant de 75 à 95% (v/v) de cette phase et une deuxième fraction représentant de 5 à 25% (v/v) de ladite phase et dans laquelle on réextrait l'HDHP.

Cette réextraction peut, par exemple, être réalisée en acidifiant la solution aqueuse basique ayant servi à retirer l'HDHP de la phase organique par l'addition d'une solution d'acide nitrique 4 à 5 M, et en faisant circuler cette solution ainsi acidifiée dans un septième extracteur, à contre-courant de la fraction de phase organique dans laquelle on souhaite réextraire cet extractant.

On récupère ainsi la phase organique sous la forme de deux fractions dont l'une contient uniquement du DMDOHEMA dans du TPH, et dont l'autre contient à la fois du DMDOHEMA et de l'HDHP dans du TPH.

Ces fractions peuvent alors être réutilisées, respectivement dans la première étape et la troisième étape du cycle suivant.

### EXEMPLE 2 : Exposé détaillé d'un deuxième exemple de mise en oeuvre du procédé de l'invention

On se réfère à présent à la figure 2 qui illustre schématiquement un deuxième exemple de mise en oeuvre du procédé de l'invention, qui est également conçu pour traiter, à une échelle industrielle, un raffinat issu du premier cycle de purification d'un procédé PUREX ou COEX™ en vue de récupérer sélectivement l'américium présent dans ce raffinat, mais dans lequel l'extractant acide est présent dans la phase organique à toutes les étapes du procédé.

Aussi, dans ce deuxième exemple, chaque cycle du procédé comprend-il les six étapes suivantes :
1) l'extraction de l'américium et d'une partie des lanthanides présents dans la phase aqueuse A1 par une phase organique contenant à la fois l'extractant solvatant et l'extractant acide ;
2) le lavage de la phase organique issue de cette extraction ;
3) la désextraction sélective du molybdène de la phase organique issue de ce lavage ;
4) la désextraction sélective de l'américium de la phase organique ainsi débarrassée du molybdène ;
5) la désextraction des lanthanides présents dans la phase organique issue de la désextraction de l'américium ; et
6) la purification de la phase organique.

Dans la première étape (dénommée « Extraction Am + Ln » sur la Figure 2), la phase aqueuse est mise à circuler dans un premier extracteur, à contre-courant d'une phase organique contenant à la fois l'extractant solvatant et l'extractant acide dans du TPH.

L'extractant solvatant est du DMDOHEMA comme dans l'exemple 1, que l'on utilise également à une concentration typiquement de 0,5 à 0,7 mole/L, par exemple de 0,6 mole/L, tandis que l'extractant acide est de l'HDEHP, que l'on utilise à une concentration typiquement de 0,1 à 0,5 mole/L, par exemple de 0,3 mole/L.

Comme dans l'exemple 1, l'acidité nitrique de la phase aqueuse A1 est, si nécessaire, rectifiée avant ou lors de son introduction dans le premier extracteur de manière à ce qu'elle se situe, de préférence, entre 2 et 6 moles/L, par exemple à 4 moles/L.

Elle est, par ailleurs, additionnée de deux agents complexants, à savoir de l'HEDTA comme dans l'exemple 1, mais qui est ici à une concentration plus élevée, typiquement de 0,05 mole/L, et un diglycolamide, en l'espèce du TEDGA, à une concentration typiquement de 0,01 à 0,5 mole/L, par exemple de 0,05 mole/L.

Dans la deuxième étape (dénommée « Lavage » sur la figure 2), la phase organique issue du premier extracteur est mise à circuler dans un deuxième extracteur, à contre-courant d'une phase aqueuse A2, qui contient typiquement de 4 à 6 moles/L d'acide nitrique, par exemple 5 moles/L, et les mêmes agents complexants, dans les mêmes gammes de concentrations, que la phase aqueuse A1.

En choisissant convenablement les rapports entre les débits auxquels circulent les phases organique et aqueuse dans chacun des premier et deuxième extracteurs et le nombre d'étages de ces extracteurs (voir exemple 3), on obtient ainsi, à l'issue de cette deuxième étape, une phase organique dans laquelle se trouvent la totalité ou la quasi totalité de l'américium, du cérium, du lanthane, du praséodyme, du néodyme, du molybdène et du fer ainsi qu'une faible quantité de zirconium, et une phase aqueuse dans laquelle se trouvent le reste du zirconium et la totalité ou quasi totalité de tous les autres éléments qui étaient présents dans la phase aqueuse A1 dont le curium.

La phase aqueuse issue de la deuxième étape est renvoyée vers le premier extracteur où elle rejoint la phase aqueuse A1 et s'ajoute à elle, tandis que la phase organique est dirigée vers un troisième extracteur dans lequel est réalisée la troisième étape (dénommée « Désextraction Mo » sur la figure 2).

Pour ce faire, ladite phase organique est mise à circuler dans le troisième extracteur, à contre-courant d'une solution aqueuse contenant un agent complexant, en l'espèce de l'acide citrique, à une concentration typiquement de 0,1 à 1 mole/L et dont le pH est ajusté à une valeur comprise entre 2 et 4, par exemple de 3, par l'addition d'une base comme la soude.

On obtient ainsi, à l'issue de cette troisième étape, une phase aqueuse chargée en molybdène et une phase organique débarrassée de cet élément.

Dans la quatrième étape (dénommée « Désextraction Am » sur la figure 2), la phase organique est mise à circuler dans un quatrième extracteur, à contre-courant d'une phase aqueuse A3 qui contient un acide polyaminocarboxylique, en l'espèce de l'HEDTA, à une concentration typiquement de 0,01 à 0,5 mole/L, ainsi qu'un acide carboxylique ou hydroxycarboxylique capable de jouer à la fois le rôle d'agent complexant et celui de tampon, en l'espèce de l'acide glycolique à une concentration typiquement de 0,1 à 1 mole/L, et dont le pH est, de préférence, ajusté à une valeur comprise entre 2 et 4, par exemple de 3, par l'addition d'une base comme la soude.

On obtient ainsi, à l'issue de cette quatrième étape, une phase aqueuse qui ne contient, comme élément métallique, que de l'américium et une phase organique dans laquelle se trouvent le cérium, le lanthane, le praséodyme, le néodyme et le fer, étant entendu que le molybdène a été désextrait au cours de la troisième étape.

Dans la cinquième étape (dénommée « Désextraction Ln » sur la figure 2), cette phase organique est mise à circuler dans un quatrième extracteur, à contre-courant d'une phase aqueuse A4 qui contient typiquement de 0,5 à 1 mole/L d'acide nitrique et deux agents complexants, à savoir un diglycolamide, en l'espèce du TEDGA, que l'on utilise typiquement à une concentration de 0,01 à 0,5 mole/L, et éventuellement de l'acide oxalique, que l'on utilise typiquement à une concentration de 0,01 à 0,8 mole/L.

On obtient ainsi, à l'issue de cette cinquième étape, une phase organique qui ne contient plus aucun des éléments métalliques dont elle s'était chargée au cours de la première étape mais qui contient, outre l'extractant solvatant et l'extractant acide, un certain nombre d'impuretés et de produits de dégradation, notamment de radiolyse, qui se sont accumulés au cours des étapes précédentes.

Dans la sixième étape (dénommée « Purification DMDOHEMA + HDEHP + TPH » sur la figure 2), cette phase organique est purifiée de la même façon que dans l'exemple 1.

La phase organique ainsi purifiée peut alors être réutilisée dans la première étape du cycle suivant.

### EXEMPLE 3 : Validation des exemples 1 et 2

Dans ce qui suit, les coefficients de distribution des éléments métalliques ont été déterminés :
- dans le cas de l'américium et du curium, en calculant le rapport de l'activité de ces éléments dans une phase organique donnée à l'activité de ces mêmes éléments dans la phase aqueuse ayant été mise en contact avec cette phase organique ;
- dans le cas des autres éléments métalliques, en calculant la différence entre les concentrations initiales et finales de ces éléments dans une phase aqueuse donnée, et en calculant le rapport entre cette différence et la concentration initiale de ces mêmes éléments dans cette même phase aqueuse.

Toutes les mesures d'activité de l'américium et du curium ont été réalisées par spectrométrie α tandis que toutes les mesures de concentration des autres éléments métalliques ont été réalisées par spectrométrie d'émission atomique par plasma inductif, encore connue sous le sigle ICP-AES.

### 1) Validation du premier exemple de mise en oeuvre :

### * Extraction de l'américium et d'une partie des lanthanides/Lavage de la phase organique :

Ces étapes ont été validées par des essais en tube, complétés par des calculs basés sur les résultats obtenus dans le cadre de ces essais.

Les essais en tube ont été réalisés en utilisant :
* comme phase organique : une phase constituée par 0,65 mole/L de DMDOHEMA dans du TPH ;
* comme phase aqueuse A1 : une solution simulant un raffinat issu du traitement, par le procédé PUREX, d'un combustible nucléaire irradié de type UOX3 (sauf en ce qui concerne le curium qui n'est présent qu'à l'état de traces), et à laquelle ont été ajoutées 0,01 mole/L d'acide oxalique et 0,01 mole/L de HEDTA ; et
* comme phase aqueuse A2 : une solution d'acidité nitrique égale à 2,4 M et contenant 0,01 mole/L d'acide oxalique et 0,01 mole/L de HEDTA.
L'acidité nitrique de la phase aqueuse A1 est de 4,2 moles/L et sa composition qualitative et quantitative en éléments métalliques est donnée dans le tableau I ci-après. Tous ces éléments ont été dissous sous la forme de nitrates.

**Tableau I**

| **Eléments** | **Concentrations** | |
|---|---|---|
| | mM | mg/L |
| Am | 0,73 | 170 |
| Cm | 1,4.10⁻⁵ | 3,4.10⁻³ |
| Y | 1,7 | 150 |
| La | 2,9 | 410 |
| Ce | 5,7 | 790 |
| Pr | 2,6 | 370 |
| Nd | 9,4 | 1360 |
| Sm | 1,8 | 270 |
| Eu | 0,34 | 52 |
| Gd | 0,32 | 50 |
| Pd | 5,0 | 530 |
| Zr | 13 | 1190 |
| Mo | 12 | 1130 |
| Fe | 1,8 | 100 |

La phase organique, préalablement équilibrée en acide par addition d'acide nitrique 3 M, a été mise en contact avec la phase aqueuse A1, à raison d'1,3 volume de phase aqueuse A1 pour 1 volume de phase organique, et la phase aqueuse A2, à raison de 3,1 volumes de phase aqueuse A2 pour 1 volume de phase organique, et laissées sous agitation pendant 10 minutes à une température constante de 25°C.

Après décantation et séparation des phases aqueuse et organique, les activités de l'américium et du curium ont été mesurées dans chacune de ces phases tandis que les concentrations des autres éléments métalliques ont été mesurées dans la seule phase aqueuse.

Puis, la phase organique a été mise en contact avec la phase aqueuse A2, à raison d'un volume de phase organique pour 3,1 volumes de phase aqueuse, et les deux phases ont été laissées sous agitation pendant 10 minutes à une température constante de 25°C.

Là également, après décantation et séparation de ces phases, les activités de l'américium et du curium ont été mesurées dans chacune d'elles tandis que les concentrations des autres éléments métalliques ont été mesurées dans la seule phase aqueuse.

Le tableau II ci-après présente les coefficients de distribution D_{M}, les facteurs d'extraction E_{M} et les facteurs de séparation FS_{Am/M} obtenus à partir des activités et concentrations ainsi mesurées.

**Tableau II**

| **Eléments** | **Extraction** | | | **Lavage** | | |
|---|---|---|---|---|---|---|
| | **D_{M}** | **E_{M}** | **FS_{Am/M}** | **D_{M}** | **E_{M}** | **FS_{Am/M}** |
| Am | 6,2 | 1,43 | 1 | 4,5 | 1,44 | 1 |
| Cm | 4,1 | 0,94 | 1,5 | 2,8 | 0,90 | 1,6 |
| Y | 1,2 | 0,28 | 5,2 | 0,9 | 0,29 | 5,0 |
| La | 3,6 | 0,83 | 1,7 | 2,6 | 0,83 | 1,7 |
| Ce | 4,7 | 1,08 | 1,3 | 3,4 | 1,09 | 1,3 |
| Pr | 4,3 | 0,99 | 1,4 | 3,1 | 0,99 | 1,5 |
| Nd | 3,6 | 0,83 | 1,7 | 2,6 | 0,83 | 1,7 |
| Sm | 4,1 | 0,94 | 1,5 | 2,9 | 0,93 | 1,6 |
| Eu | 3,3 | 0,76 | 1,9 | 2,4 | 0,77 | 1,9 |
| Gd | 2,2 | 0,51 | 2,9 | 1,6 | 0,51 | 2,8 |
| Pd | 0,8 | 0,18 | 7,7 | 0,6 | 0,19 | 7,5 |
| Zr | 0,4 | 0,09 | 14,0 | 0,3 | 0,10 | 15 |
| Mo | 0,9 | 0,21 | 6,6 | 0,6 | 0,19 | 7,5 |
| Fe | 2,1 | 0,48 | 2,9 | 1,5 | 0,48 | 3,0 |

Des calculs réalisés à partir des coefficients de distribution et des facteurs d'extraction présentés dans ce tableau montrent qu'il est possible d'obtenir, à une échelle industrielle, une très bonne séparation entre ces éléments en utilisant des extracteurs comportant un nombre suffisant d'étages.

Ainsi, par exemple, un schéma consistant à utiliser :
- un extracteur à 24 étages pour l'étape d'extraction couplé à un extracteur à 24 étages pour l'étape de lavage ;
- les mêmes acidités que celles utilisées pour les essais en tube ;
- le même extractant (DMDOHEMA) et les mêmes complexants (HEDTA + acide oxalique) que ceux utilisés pour les essais en tube et dans les mêmes concentrations ; et
- des rapports de débits O/A proportionnels aux rapports de volumes employés pour les essais en tube, soit des rapports de débits O/A de 0,23 pour l'étape d'extraction et de 0,32 pour l'étape de lavage ;
conduit aux répartitions montrées dans le tableau III ci-après.

**Tableau III**

| **Eléments** | **Phase aqueuse issue de l'extraction** | **Phase organique issue du lavage** |
|---|---|---|
| Am | 0,05% | 99,95% |
| Cm | 99,80% | 0,20% |
| Y | 100% | 0% |
| La | 99,55% | 0,45% |
| Ce | 22,16% | 77,84% |
| Pr | 70,64% | 29,36% |
| Nd | 99,56% | 0,44% |
| Sm | 99,11% | 0,89% |
| Eu | 100% | 0% |
| Gd | 100% | 0% |
| Pd | 100% | 0% |
| Zr | 100% | 0% |
| Mo | 100% | 0% |
| Fe | 100% | 0% |

Ainsi, l'américium se retrouve dans la phase organique issue du lavage à plus de 99,95% avec environ 78% de cérium, 29% de praséodyme, mais avec seulement 0,2% de curium et 0,4 à 0,9% de lanthane, de néodyme et de samarium. Les autres produits de fission restent, eux, dans la phase aqueuse.

### * Désextraction de l'américium :

Cette étape a été validée par des essais en tube qui ont été réalisés en utilisant :
* une phase organique simulant la phase organique qui serait obtenue en appliquant le schéma calculé qui vient d'être décrit, contenant donc 0,4 mole/L d'acide nitrique, de l'américium, du lanthane, du cérium, du praséodyme, du néodyme et du samarium, et à laquelle a été ajoutée 0,15 mole/L de HDHP ; et
* comme phase aqueuse A3 : une solution contenant 0,05 mole/L de DTPA et 1 mole/L d'acide glycolique, et dont le pH a été ajusté à 3 par addition de soude.

Ces deux phases ont été mises en contact l'une avec l'autre, volume à volume, 1/25^{ème} du volume de la phase aqueuse provenant de l'ajout d'un petit volume de soude 10 M. L'addition de ce petit volume de soude est destinée à neutraliser partiellement l'acidité nitrique de la phase organique de manière à ce que le pH de la phase aqueuse A3 puisse rester, après la mise en contact des deux phases, proche de 3 et, ainsi, dans le domaine d'acidités pour lequel le système DTPA/acide glycolique complexe sélectivement l'américium.

Les phases organique et aqueuse ont été laissées sous agitation pendant 10 minutes à une température constante de 25°C. Puis, après décantation et séparation de ces phases, l'activité de l'américium a été mesurée dans chacune d'elles, tandis que les concentrations des autres éléments métalliques ont été mesurées dans la seule phase aqueuse.

Le tableau IV ci-après présente les coefficients de distribution D_{M} ainsi que les facteurs de séparation FS_{M/Am} obtenus à partir des activités et concentrations ainsi mesurées.

**Tableau IV**

| **Eléments** | **D_{M}** | **FS_{M/Am}** |
|---|---|---|
| Am | 0,06 | 1 |
| La | 21 | 350 |
| Ce | 13 | 217 |
| Pr | 4 | 67 |
| Nd | 1,7 | 28 |
| Sm | 1,9 | 32 |

Les coefficients de distribution obtenus sont tout à fait satisfaisants puisqu'ils devraient permettre d'obtenir, à une échelle industrielle, une désextraction de la totalité de l'américium avec un maintien des lanthanides en phase organique en utilisant un rapport de débits O/A d'environ 2.

En outre, les facteurs de séparation sont tous supérieurs à 20, ce qui est largement suffisant pour obtenir la séparation de l'américium des lanthanides en utilisant un extracteur comprenant un nombre limité d'étages, par exemple 16 étages.

### * Désextraction des lanthanides :

Cette étape a été validée par des essais en tube qui ont été réalisés en utilisant :
* une phase organique telle qu'obtenue à l'issue des essais en tube portant sur la désextraction de l'américium ; et
* comme phase aqueuse A4 : soit une solution aqueuse d'acide nitrique 1 M soit une solution d'acide nitrique 0,5 M contenant 0,2 mole/L de TEDGA.

Ces deux phases ont été mises en contact l'une avec l'autre, volume à volume, et laissées sous agitation pendant 10 minutes à une température constante de 25°C.

Puis, après décantation et séparation de ces phases, les concentrations du lanthane, du cérium, du praséodyme, du néodyme et du samarium ont été mesurées dans la seule phase aqueuse.

Le tableau V ci-après présente, pour chaque type de phase aqueuse A4, les coefficients de distribution D_{M} obtenus à partir des concentrations ainsi mesurées.

**Tableau V**

| **Lanthanides** | **D_{M}** | **D_{M}** |
|---|---|---|
| | A4 = HNO₃ 1 M | A4 = HNO₃ 0, 5 M + TEDGA 0,2 M |
| La | 0,4 | 0,06 |
| Ce | 0,6 | 0,03 |
| Pr | 0,6 | 0,02 |
| Nd | 0,6 | 0,01 |
| Sm | 0,6 | 0,01 |

Ces coefficients de distribution sont tout à fait satisfaisants puisqu'ils devraient permettre d'obtenir, à une échelle industrielle, une désextraction quantitative des lanthanides en utilisant un extracteur comprenant au plus 8 étages et un rapport de débits organique sur aqueux de 0,5 ou de 6,5 selon que la phase aqueuse utilisée est une solution aqueuse d'acide nitrique 1 M ou une solution d'acide nitrique 0,5 M contenant 0,2 mole/L de TEDGA. L'intérêt d'utiliser ce second type de phase est de réduire considérablement le volume de flux aqueux généré.

### 2) Validation du deuxième exemple de mise en oeuvre :

### * Extraction de l'américium et d'une partie des lanthanides/Lavage de la phase organique :

Cette étape a été validée par des essais en tube et par des calculs basés sur les résultats obtenus dans le cadre de ces essais.

Les essais en tube ont été réalisés en utilisant :
* comme phase organique : une phase contenant 0,6 mole/L de DMDOHEMA et 0,3 mole/L d'HDEHP dans du TPH ;
* comme phase aqueuse A1 : une solution d'acidité nitrique égale à 4 M, de composition qualitative et quantitative identique à celle présentée dans le tableau I ci-avant et à laquelle ont été ajoutées 0,05 mole/L de TEDGA et 0,05 mole/L de HEDTA ; et
* comme phase aqueuse A2 : une solution d'acide nitrique égale à 5 M et contenant 0,07 mole/L de TEDGA et 0,05 mole/L d'HEDTA.

La phase organique, préalablement équilibrée en acide par addition d'acide nitrique 4 M, et la phase aqueuse A1 ont été mises en contact l'une avec l'autre, volume à volume, et laissées sous agitation pendant 10 minutes à une température constante de 25°C.

Après décantation et séparation des phases organique et aqueuse, les activités de l'américium et du curium ont été mesurées dans chacune de ces phases, tandis que les concentrations des autres éléments métalliques ont été mesurées dans la seule phase aqueuse.

Puis, la phase organique a été mise en contact avec la phase aqueuse A2, volume à volume, et ces phases ont été laissées sous agitation pendant 10 minutes à une température constante de 25°C.

Là également, après décantation et séparation des phases organique et aqueuse, les activités de l'américium et du curium ont été mesurées dans chacune de ces phases, tandis que les concentrations des autres éléments métalliques ont été mesurées dans la seule phase aqueuse.

Le tableau VI ci-après présente les coefficients de distribution D_{M}, les facteurs d'extraction E_{M} et les facteurs de séparation FS_{Am/M} obtenus à partir des activités et concentrations ainsi mesurées.

**Tableau VI**

| **Eléments** | **Extraction** | | | **Lavage** | | |
|---|---|---|---|---|---|---|
| | **D_{M}** | **E_{M}** | **FS_{Am/M}** | **D_{M}** | **E_{M}** | **FS_{Am/M}** |
| Am | 3,4 | 1,4 | 1 | 0,52 | 1,6 | 1 |
| Cm | 1, 9 | 0,76 | 1,8 | 0,21 | 0,63 | 2,5 |
| Y | 0,14 | 0,056 | 24 | 0,01 | 0,03 | 52 |
| La | 3,4 | 1,4 | 1 | 1,1 | 3,3 | 0,5 |
| Ce | 4,0 | 1,6 | 0,9 | 0,9 | 2,7 | 0,6 |
| Pr | 3,7 | 1,5 | 0,9 | 0,7 | 2,1 | 0,7 |
| Nd | 3,1 | 1,3 | 1,1 | 0,36 | 1,1 | 1,4 |
| Sm | 1,0 | 0,4 | 3,4 | 0,13 | 0,39 | 4 |
| Eu | 0,96 | 0,38 | 3,5 | 0,05 | 0,15 | 10 |
| Gd | 0,56 | 0,23 | 6,1 | 0,02 | 0,06 | 26 |
| Pd | 0,05 | 0,02 | 68 | 0,1 | 0,3 | 5,2 |
| Zr | 0,024 | 0,009 | 142 | 1, 9 | 5,7 | 0,3 |
| Mo | 46 | 18 | 0,1 | 26 | 78 | 0 |
| Fe | 59 | 24 | 0,06 | 10 | 30 | 0,1 |

En l'absence de TEDGA dans la phase aqueuse A1, les facteurs de séparation entre l'américium et les autres éléments métalliques sont comparables à ceux indiqués dans le tableau II ci-avant car, à forte acidité nitrique, c'est le DMDOHEMA qui est l'extractant prépondérant de l'américium, du curium et des lanthanides(III). L'HDEHP est prépondérant pour l'extraction du molybdène, du zirconium et du fer et joue un rôle modificateur de phase permettant au DMDOHEMA d'extraire plus de cations que lorsqu'il est utilisé seul.

En présence de TEDGA, on constate que les facteurs de séparation sont modifiés. Les facteurs de séparation entre l'américium et le curium, les lanthanides lourds (Sm, Eu, Gd), l'yttrium et le zirconium sont augmentés. Par contre, les facteurs de séparation entre l'américium et les lanthanides légers (La, Ce, Pr, Nd) sont plus faibles qu'en l'absence de TEDGA. Ce qui signifie que le TEDGA permet d'exalter non seulement le facteur de séparation entre l'américium et le curium mais également les facteurs de séparation entre les lanthanides de numéro atomique adjacent.

La comparaison des résultats respectivement obtenus pour l'extraction et le lavage montre que l'utilisation d'une quantité plus importante de TEDGA permet d'augmenter le facteur de séparation entre l'américium et le curium. Ainsi, en passant d'une teneur en TEDGA de 0,05 M (colonne « extraction ») à une teneur en TEDGA de 0,07 M (colonne « lavage »), le facteur de séparation FS_{Am/Cm} est augmenté de 40%. Par ailleurs, le facteur de séparation FS_{Am/Eu} est plus que doublé tandis que le facteur de séparation FS_{Am/La} est réduit de moitié.

Ces résultats montrent que, grâce au TEDGA, il y a moins de lanthanides qui ont un comportement proche de celui de l'américium, ce qui réduit le risque d'accumulation de ces éléments par un effet de désextraction dans l'étape de lavage et de réextraction dans l'étape d'extraction.

En outre, l'augmentation du facteur de séparation FS_{Am/Cm} permet d'envisager une réduction du nombre d'étages nécessaires pour opérer l'extraction de l'américium et le lavage de la phase organique issue de cette extraction par rapport à celui que nécessiteraient ces mêmes opérations en l'absence de TEDGA. En effet, un facteur de séparation FS_{Am/Cm} passant de 1,6 (tableau II) à 2,5 (tableau VI) permet de réduire le nombre d'étages d'un facteur 2.

Ainsi, des calculs réalisés à partir des coefficients de distribution et des facteurs de séparation indiqués dans le tableau VI ci-avant montrent qu'un schéma consistant à utiliser :
- un extracteur à 15 étages pour l'extraction couplé à un appareil à 12 étages pour le lavage ;
- les mêmes acidités que celles utilisées pour les essais en tube ;
- les mêmes extractants (DMDOHEMA + HDEHP) et les mêmes complexants (TEDGA + HEDTA) que ceux utilisés pour les essais en tube et dans les mêmes concentrations ; et
- des rapports de débits O/A de 0,4 pour l'extraction et de 3 pour le lavage ;
conduit aux répartitions montrées dans le tableau VII ci-après.

**Tableau VII**

| **Eléments** | **Phase aqueuse issue de l'extraction** | **Phase organique issue du lavage** |
|---|---|---|
| Am | 0,05% | 99,95% |
| Cm | 99,92% | 0,07% |
| Y | 100% | 0% |
| La | 0,01% | 99,99% |
| Ce | 0,01% | 99,99% |
| Pr | 0% | 100% |
| Nd | 0,10% | 99,90% |
| Sm | 99,97% | 0,02% |
| Eu | 99,99% | 0,01% |
| Gd | 100% | 0% |
| Pd | 100% | 0% |
| Zr | 99,20% | 0,80% |
| Mo | 0% | 100% |
| Fe | 0% | 100% |

Ainsi, l'américium se retrouve dans la phase organique issue du lavage à plus de 99,95% avec environ 100% de lanthane, de cérium, de praséodyme, de néodyme, de molybdène et de fer mais avec seulement 0,07% de curium et 0,8% de zirconium. Les autres produits de fission restent, eux, dans la phase aqueuse issue de l'extraction.

### * Désextraction du molybdène :

Cette étape a été validée par des essais en tube qui ont été réalisés en utilisant :
* une phase organique simulant la phase organique qui serait obtenue en appliquant le schéma calculé qui vient d'être décrit, contenant donc 0,33 mole/L d'acide nitrique et de l'américium, du lanthane, du cérium, du praséodyme, du néodyme, du zirconium, du molybdène et du fer ; et
* comme phase aqueuse : une solution contenant 0,2 mole/L d'acide citrique et dont le pH a été ajusté à 3 par addition de soude.

Ces deux phases ont été mises en contact l'une avec l'autre, volume à volume, 1/30^{ème} du volume de la phase aqueuse provenant de l'ajout d'un petit volume de soude 10 M, destiné à neutraliser partiellement l'acide nitrique de la phase organique.

Les phases organique et aqueuse ont été laissées sous agitation pendant 10 minutes à une température constante de 25°C. Puis, après décantation et séparation de ces phases, l'activité de l'américium a été mesurée dans chacune d'elles, tandis que les concentrations des autres éléments métalliques ont été mesurées dans la seule phase aqueuse.

Le tableau VIII ci-après présente les coefficients de distribution D_{M} ainsi que les facteurs de séparation FS_{M/Mo} obtenus à partir des activités et concentrations ainsi mesurées.

**Tableau VIII**

| **Eléments** | **D_{M}** | **FS_{M}/_{Mo}** |
|---|---|---|
| Am | 19 | 9.10² |
| La | 40 | 2.10³ |
| Ce | 47 | 2.10³ |
| Pr | 67 | 3.10³ |
| Nd | 60 | 3.10³ |
| Zr | 513 | 2.10⁴ |
| Mo | 0,02 | 1 |
| Fe | 15 | 7.10² |

Comme le montre ce tableau, les coefficients de distribution de tous les éléments métalliques autres que le molybdène sont supérieurs à 1 et les facteurs de séparation entre ces éléments et le molybdène sont tous supérieurs à 700.

Il est donc possible d'envisager de réaliser, à une échelle industrielle, la désextraction sélective du molybdène avec un extracteur comprenant un nombre limité d'étages, par exemple 8 étages, et en utilisant un rapport de débits O/A de 1 à 10 de manière à générer un flux aqueux de faible volume.

### * Désextraction de l'américium :

Cette étape a été validée par des essais en tube qui ont été réalisés en utilisant :
* une phase organique telle qu'obtenue à l'issue des essais en tube portant sur la désextraction du molybdène ; et
* comme phase aqueuse A3 : une solution contenant 0,05 mole/L d'HEDTA et 1 mole/L d'acide glycolique, et dont le pH a été ajusté à 3 par addition de soude.

Ces deux phases ont été mises en contact l'une avec l'autre, volume à volume, et laissées sous agitation pendant 10 minutes à une température constante de 25°C. Puis, après décantation et séparation de ces phases, l'activité de l'américium a été mesurée dans chacune d'elles, tandis que les concentrations des autres éléments métalliques ont été mesurées dans la seule phase aqueuse.

Le tableau IX ci-après présente les coefficients de distribution D_{M} ainsi que les facteurs de séparation FS_{M/Am} obtenus à partir des activités et concentrations ainsi mesurées.

**Tableau IX**

| **Eléments** | **D_{M}** | **FS_{M/Am}** |
|---|---|---|
| Am | 0,13 | 1 |
| La | 8,2 | 63 |
| Ce | 5,1 | 39 |
| Pr | 2,6 | 20 |
| Nd | 1,6 | 12 |
| Zr | 105 | 807 |
| Fe | 11 | 86 |

Comme le montre ce tableau, les coefficients de distribution sont supérieurs à 1 pour tous les éléments métalliques autres que l'américium et les facteurs de séparation entre ces éléments et l'américium sont tous supérieurs à 9.

Il est donc possible d'envisager de réaliser, à une échelle industrielle, la désextraction de l'américium en utilisant un extracteur comprenant de l'ordre de 16 étages et un rapport de débits O/A de 0,5 à 2.

### * Désextraction des lanthanides:

Cette étape a été validée par des essais en tube qui ont été réalisés en utilisant :
* une phase organique telle qu'obtenue à l'issue des essais en tube portant sur la désextraction de l'américium ; et
* comme phase aqueuse A4 : une solution d'acidité nitrique égale à 1 M et comprenant 0,2 mole/L de TEDGA et 0,8 mole/L d'acide oxalique.

Ces deux phases ont été mises en contact l'une avec l'autre, volume à volume, et laissées sous agitation pendant 10 minutes à une température constante de 25°C. Puis, après décantation et séparation de ces phases, les concentrations des différents métalliques ont été mesurées dans la seule phase aqueuse.

Le tableau X ci-après présente les coefficients de distribution D_{M} obtenus à partir des concentrations ainsi mesurées.

**Tableau X**

| **Eléments** | **D_{M}** |
|---|---|
| La | 0,003 |
| Ce | 0,001 |
| Pr | 0,001 |
| Nd | 0,001 |
| Zr | 0,002 |
| Fe | 0,015 |

Les coefficients de distribution obtenus sont tout à fait satisfaisants puisqu'ils devraient permettre d'obtenir, à une échelle industrielle, une désextraction quantitative des lanthanides, du fer et du zirconium en utilisant un extracteur comprenant de l'ordre de 4 étages et un rapport de débits A/O de l'ordre de 0,1.

### REFERENCES CITEES

[1] Demande internationale PCT WO 2007/135178
[2] Brevet français n° 2 731 717
[3] B. Weaver et F.A. Kappelmann, Rapport ORNL-3559, 1964
[4] Demande de brevet US n° 2007/0009410
[5] P. Baron, M. Lecomte, B. Boullis et D. Warin, « Séparation of the Long Lived Radionuclides: Current Status and Future R&D Program in France », Proceedings of Global 2003, New Orleans, Louisiana, November 2003, p. 508-511.
[6] Brevet français n° 2 845 616

## Revendications

1. Procédé de récupération sélective de l'américium à partir d'une phase aqueuse A1 qui contient au moins 0,5 mole/L d'acide nitrique, de l'américium, du curium et des produits de fission dont des lanthanides, mais qui est exempte d'uranium, de plutonium et de neptunium ou qui ne contient ces trois derniers éléments qu'à l'état de traces, lequel procédé est **caractérisé en ce qu'**il comprend au moins les étapes suivantes :
a) l'extraction de l'américium et d'une partie des lanthanides de la phase aqueuse A1, par circulation de cette phase aqueuse dans un premier extracteur, à contre-courant d'une phase organique non miscible à l'eau, qui contient un extractant solvatant capable d'extraire davantage l'américium que le curium d'une phase aqueuse acide, et éventuellement un extractant acide, dans un diluant organique ;
b) le lavage de la phase organique issue de l'étape a), par circulation de cette phase organique dans un deuxième extracteur, à contre-courant d'une phase aqueuse A2 qui contient au moins 0,5 mole/L d'acide nitrique ;
c) éventuellement l'ajout à la phase organique issue de l'étape b) de l'extractant acide si celui-ci n'est pas déjà présent dans cette phase ;
d) la désextraction sélective de l'américium présent dans la phase organique issue de l'étape b) ou de l'étape c), par circulation de cette phase organique dans un troisième extracteur, à contre-courant d'une phase aqueuse A3 qui présente un pH au moins égal à 1 et qui contient un ou plusieurs agents complexants ; et
e) la désextraction des lanthanides présents dans la phase organique issue de l'étape c), par circulation de cette phase organique dans un quatrième extracteur, à contre-courant d'une phase aqueuse A4 qui contient moins de 1,5 mole/L d'acide nitrique ;
et **en ce que** le rapport entre les débits auxquels circulent la phase organique et la phase aqueuse A1 dans le premier extracteur et le rapport entre les débits auxquels circulent la phase organique et la phase aqueuse A2 dans le deuxième extracteur sont choisis de sorte que le facteur d'extraction de l'américium obtenu à chacune des étapes a) et b) soit supérieur à 1 et que le facteur d'extraction du curium obtenu à chacune des étapes a) et b) soit inférieur à 1.

2. Procédé selon la revendication 1, dans lequel l'extractant solvatant est choisi parmi les malonamides, les oxydes de carbamoylphosphine, les sulfures de triisobutylphosphine, les carbamoylphosphonates et leurs mélanges.

3. Procédé selon la revendication 2, dans lequel l'extractant solvatant est un malonamide et, de préférence, le N,N'-diméthyl-N,N'-dioctylhexyléthoxy-malonamide.

4. Procédé selon l'une quelconque des revendications 1 à 3, dans lequel l'extractant acide est choisi parmi les acides mono- et dialkyl-phosphoriques, les acides mono- et dialkyl-phosphoniques, les acides mono- et dialkyl-phosphiniques, les acides thiophosphoriques, les acides thiophosphoniques, les acides thiophosphiniques, les acides carboxyliques lipophiles, les acides sulfoniques et leurs mélanges.

5. Procédé selon la revendication 4, dans lequel l'extractant acide est un acide dialkyl-phosphorique et, de préférence, l'acide di(n-hexyl)-phosphorique ou l'acide di(2-éthylhexyl)-phosphorique.

6. Procédé selon l'une quelconque des revendications précédentes, dans lequel le diluant organique est un diluant aliphatique et, de préférence, du tétrapropylène hydrogéné.

7. Procédé selon l'une quelconque des revendications précédentes, dans lequel la phase aqueuse A1 a une teneur en acide nitrique de 2 à 6 moles/L.

8. Procédé selon l'une quelconque des revendications précédentes, dans lequel la phase aqueuse A1 contient un ou plusieurs agents complexants choisis parmi les acides hydroxycarboxyliques, les acides polyaminocarboxyliques et les diglycolamides.

9. Procédé selon la revendication 8, dans lequel la phase aqueuse A1 contient un diglycolamide.

10. Procédé selon l'une quelconque des revendications précédentes, dans lequel le diglycolamide est associé à un acide polyaminocarboxylique.

11. Procédé selon l'une quelconque des revendications précédentes, dans lequel la phase aqueuse A2 a une teneur en acide nitrique de 2 à 6 moles/L.

12. Procédé selon l'une quelconque des revendications 8 à 11, dans lequel la phase aqueuse A2 contient le ou les mêmes agents complexants que ceux présents dans la phase aqueuse A1 et dans les mêmes gammes de concentrations.

13. Procédé selon l'une quelconque des revendications précédentes, dans lequel la phase aqueuse A3 est une solution contenant un acide polyaminocarboxylique et un acide hydroxycarboxylique, et dont le pH est ajusté à une valeur de 2 à 4 par l'addition d'une base.

14. Procédé selon l'une quelconque des revendications précédentes, dans lequel la phase aqueuse A4 est une solution contenant de 0,5 à 1,5 mole/L d'acide nitrique et un diglycolamide, seul ou en association avec un acide carboxylique.

15. Procédé selon l'une quelconque des revendications 9, 10 ou 14, dans lequel le diglycolamide est le tétraéthyldiglycolamide.

16. Procédé selon l'une quelconque des revendications 1 à 15, dans lequel la phase organique utilisée à l'étape a) ne contient que l'extractant solvatant en sorte que le procédé comprend toutes les étapes a) à e).

17. Procédé selon la revendication 16, qui comprend, après l'étape e), une étape de séparation des deux extractants.

18. Procédé selon la revendication 17, dans lequel la séparation des deux extractants est réalisée par désextraction de l'extractant acide de la phase organique.

19. Procédé selon la revendication 17 ou la revendication 18, qui comprend, après l'étape de séparation des deux extractants, une étape de purification de la phase organique.

20. Procédé selon la revendication 19 dépendante de la revendication 18, qui comprend, après l'étape de purification de la phase organique, une étape de réextraction de l'extractant acide dans une fraction de la phase organique.

21. Procédé selon l'une quelconque des revendications 1 à 15, dans lequel la phase organique utilisée à l'étape a) contient l'extractant solvatant et l'extractant acide en sorte que le procédé ne comprend pas d'étape c).

22. Procédé selon la revendication 21, qui comprend, après l'étape e), une étape de purification de la phase organique.

23. Procédé selon l'une quelconque des revendications précédentes, dans lequel la phase aqueuse A1 est un raffinat issu du premier cycle de purification d'un procédé PUREX ou COEX™.

## Patentansprüche

1. Verfahren zur selektiven Rückgewinnung von Americium aus einer wässrigen Phase A1, die zumindest 0,5 mol/l Salpetersäure, Americium, Curium und Spaltprodukte, darunter Lanthanide, enthält, aber frei ist von Uran, Plutonium und Neptunium bzw. diese drei letztgenannten Elemente nur in Form von Spuren enthält, welches Verfahren **dadurch gekennzeichnet ist, dass** es zumindest die nachfolgenden Schritte umfasst:
a) Extraktion von Americium und eines Teils der Lanthanide aus der wässrigen Phase A1 durch Strömen dieser wässrigen Phase in einem ersten Extraktionsapparat in Gegenstrom mit einer mit Wasser nicht mischbaren organischen Phase, die ein solvatisierendes Extraktionsmittel, das in der Lage ist, mehr Americium als Curium aus einer sauren, wässrigen Phase zu extrahieren, und gegebenenfalls ein saures Extraktionsmittel in einem organischen Verdünnungsmittel enthält;
b) Auswaschen der aus Schritt a) gewonnenen organischen Phase durch Strömen dieser organischen Phase in einem zweiten Extraktionsapparat im Gegenstrom mit einer wässrigen Phase A2, die zumindest 0,5 mol/l Salpetersäure enthält;
c) gegebenenfalls Beimengen des sauren Extraktionsmittels zu der aus Schritt b) gewonnenen organischen Phase, wenn dieses nicht bereits in dieser Phase vorhanden ist;
d) selektive Desextraktion von Americium, das in der aus Schritt b) oder Schritt c) gewonnenen organischen Phase vorhanden ist, durch Strömen dieser organischen Phase in einem dritten Extraktionsapparat im Gegenstrom mit einer wässrigen Phase A3, die einen pH-Wert von mindestens gleich 1 aufweist und einen oder mehrere Komplexbildner enthält; und
e) Desextraktion der Lanthanide, die in der aus Schritt c) gewonnenen organischen Phase vorhanden sind, durch Strömen dieser organischen Phase in einem vierten Extraktionsapparat im Gegenstrom mit einer wässrigen Phase A4, die zumindest 1,5 mol/l Salpetersäure enthält;
und dass das Verhältnis zwischen den Durchsatzmengen, in denen die organische Phase und die wässrige Phase A1 in dem ersten Extraktionsapparat strömen, und das Verhältnis zwischen den Durchsatzmengen, in denen die organische Phase und die wässrige Phase A2 in dem zweiten Extraktionsapparat strömen, derart gewählt sind, dass der Extraktionsfaktor von in jedem der Schritte a) und b) gewonnenen Americium höher als 1 ist und dass der Extraktionsfaktor von in jedem der Schritte a) und b) gewonnenen Curium geringer als 1 ist.

2. Verfahren nach Anspruch 1, wobei das solvatisierende Extraktionsmittel ausgewählt ist aus Malonamiden, Carbamoylphosphinoxiden, Trüsobutylphosphinsulfiden, Carbamoylphosphonaten und deren Gemische.

3. Verfahren nach Anspruch 2, wobei das solvatisierende Extraktionsmittel ein Malonamid und vorzugsweise das N,N'-dimethyl-N,N'-dioctylhexylethoxy-Malonamid ist.

4. Verfahren nach einem der Ansprüche 1 bis 3, wobei das saure Extraktionsmittel ausgewählt ist aus den Mono- und Dialkylphosphorsäuren, Mono- und Dialkylphosphonsäuren, Mono- und Dialkylphosphinsäuren, Thiophosphorsäuren, Thiophosphonsäuren, Thiophosphinsäuren, lipophilen Carbonsäuren, Sulfonsäuren und deren Gemischen.

5. Verfahren nach Anspruch 4, wobei das saure Extraktionsmittel eine Dialkylphosphorsäure und vorzugsweise Di(*n*-hexyl)Phosphorsäure oder Di(2-Ethylhexyl)-Phosphorsäure ist.

6. Verfahren nach einem der vorangehenden Ansprüche, wobei das organische Verdünnungsmittel ein aliphatisches Verdünnungsmittel und vorzugsweise hydriertes Tetrapropylen ist.

7. Verfahren nach einem der vorangehenden Ansprüche, wobei die wässrige Phase A1 einen Salpetersäure-Gehalt von 2 bis 6 mol/l aufweist.

8. Verfahren nach einem der vorangehenden Ansprüche, wobei die wässrige Phase A1 einen oder mehrere Komplexbildner enthält, die ausgewählt sind aus Hydroxycarboxylsäuren, Polyaminocarboxylsäuren und Diglycolamiden.

9. Verfahren nach Anspruch 8, wobei die wässrige Phase A1 ein Diglycolamid enthält.

10. Verfahren nach einem der vorangehenden Ansprüche, wobei das Diglycolamid mit einer Polyaminocarboxylsäure verbunden ist.

11. Verfahren nach einem der vorangehenden Ansprüche, wobei die wässrige Phase A2 einen Salpetersäure-Gehalt von 2 bis 6 mol/l aufweist.

12. Verfahren nach einem der Ansprüche 8 bis 11, wobei die wässrige Phase A2 den bzw. die gleichen Komplexbildner enthält, wie in der wässrigen Phase A1 vorhanden sind, und in den gleichen Konzentrationsbereichen.

13. Verfahren nach einem der vorangehenden Ansprüche, wobei die wässrige Phase A3 eine Lösung ist, die eine Polyaminocarboxylsäure und eine Hydroxycarboxylsäure enthält und deren pH-Wert durch Beimengen einer Base auf einen Wert von 2 bis 4 eingestellt ist.

14. Verfahren nach einem der vorangehenden Ansprüche, wobei die wässrige Phase A4 eine Lösung mit 0,5 bis 1,5 mol/l Salpetersäure und einem Diglycolamid, allein oder in Verbindung mit einer Carbonsäure, ist.

15. Verfahren nach einem der Ansprüche 9, 10 oder 14, wobei das Diglycolamid Tetraethyldiglycolamid ist.

16. Verfahren nach einem der Ansprüche 1 bis 15, wobei die in Schritt a) verwendete organische Phase nur das solvatisierende Extraktionsmittel enthält, so dass das Verfahren sämtliche Schritte a) bis e) umfasst.

17. Verfahren nach Anspruch 16, das nach dem Schritt e) einen Schritt des Trennens der beiden Extraktionsmittel umfasst.

18. Verfahren nach Anspruch 17, wobei das Trennen der beiden Extraktionsmittel durch Desextraktion des sauren Extraktionsmittels aus der organischen Phase erfolgt.

19. Verfahren nach Anspruch 17 oder Anspruch 18, das nach dem Schritt des Trennens der beiden Extraktionsmittel einen Schritt des Reinigens der organischen Phase umfasst.

20. Verfahren nach Anspruch 19 in Abhängigkeit von Anspruch 18, das nach dem Schritt des Reinigens der organischen Phase einen Schritt der Rückextraktion des sauren Extraktionsmittels in einen Anteil der organischen Phase umfasst.

21. Verfahren nach einem der Ansprüche 1 bis 15, wobei die in Schritt a) verwendete organische Phase das solvatisierende Extraktionsmittel und das saure Extraktionsmittel enthält, so dass das Verfahren keinen Schritt c) umfasst.

22. Verfahren nach Anspruch 21, das nach dem Schritt e) einen Schritt des Reinigens der organischen Phase umfasst.

23. Verfahren nach einem der vorangehenden Ansprüche, wobei die wässrige Phase A1 ein Raffinat aus dem ersten Reinigungszyklus eines PUREX oder COEX™ Verfahrens ist.

## Claims

1. Method for selective recovery of americium from an A1 aqueous phase which contains at least 0.5 mol/L of nitric acid, americium, curium and fission products including lanthanides, but which is free of uranium, plutonium and neptunium or which only contains these three last elements in trace amounts, said method is **characterized in that** it comprises at least the following steps:
a) extracting the americium and a part of the lanthanides from the A1 aqueous phase, by circulating this aqueous phase in a first extractor, as a counter-current to an organic phase non-miscible with water, which contains a solvating extractant capable of extracting more americium than curium from an acid aqueous phase, and optionally an acid extractant, in an organic diluent;
b) washing the organic phase stemming from step a), by circulating this organic phase in a second extractor, as a counter-current to an A2 aqueous phase which contains at least 0.5 mol/L of nitric acid;
c) optionally adding to the organic phase stemming from step b) some acid extractant if the latter is not already present in this phase;
d) selectively de-extracting the americium present in the organic phase stemming from step b) or step c), by circulating this organic phase in a third extractor as a counter-current to an A3 aqueous phase which has a pH at least equal to 1 and which contains one or several complexing agents; and
e) de-extracting the lanthanides present in the organic phase stemming from step c), by circulating this organic phase in a fourth extractor, as a counter-current to an A4 aqueous phase which contains less than 1.5 mol/L of nitric acid;
and **in that** the ratio between the flow rates at which the organic phase and the A1 aqueous phase circulate in the first extractor and the ratio between the flow rates at which the organic phase and the A2 aqueous phase circulate in the second extractor are selected so that the extraction factor for americium obtained in each of steps a) and b) is greater than 1 and that the extraction factor for curium obtained in each of steps a) and b) is less than 1.

2. Method according to claim 1, wherein the solvating extractant is selected from malonamides, carbamoylphosphine oxides, tri-isobutylphosphine sulfides, carbamoylphosphonates and mixtures thereof.

3. Method according to claim 2, wherein the solvating extractant is a malonamide and preferably N,N'-dimethyl-N,N'-dioctylhexylethoxymalonamide.

4. Method according to any one of claims 1 to 3, wherein the acid extractant is selected from mono- and di-alkylphosphoric acids, mono- and di-alkylphosphonic acids, mono- and di-alkylphosphinic acids, thiophosphoric acids, thiophosphonic acids, thiophosphinic acids, lipophilic carboxylic acids, sulfonic acids and mixtures thereof.

5. Method according to claim 4, wherein the acid extractant is a dialkylphosphoric acid and, preferably di(n-hexyl)phosphoric acid or di(2-ethylhexyl)phosphoric acid.

6. Method according to any one of the preceding claims, wherein the organic diluent is an aliphatic diluent and preferably hydrogenated tetrapropylene.

7. Method according to any one of the preceding claims, wherein the A1 aqueous phase has a nitric acid content from 2 to 6 mol/L.

8. Method according to any one of the preceding claims, wherein the A1 aqueous phase contains one or more complexing agents selected from hydroxycarboxylic acids, polaminocarboxylic acids and diglycolamides.

9. Method according to claim 8, wherein the A1 aqueous phase contains a diglycolamide.

10. Method according to any one of the preceding claims, wherein the diglycolamide is associated with a polyaminocarboxylic acid.

11. Method according to any one of the preceding claims, wherein the A2 aqueous phase has a nitric acid content from 2 to 6 mol/L.

12. Method according to any one of claims 8 to 11, wherein the A2 aqueous phase contains the same complexing agent(s) as those present in the A1 aqueous phase and in the same ranges of concentrations.

13. Method according to any one of the preceding claims, wherein the A3 aqueous phase is a solution containing a polyaminocarboxylic acid and a hydroxycarboxylic acid, and the pH of which is adjusted to a value from 2 to 4 by adding a base.

14. Method according to any one of the preceding claims, wherein the A4 aqueous phase is a solution containing from 0.5 to 1.5 mol/L of nitric acid and a diglycolamide, alone or in association with a carboxylic acid.

15. Method according to any one of claims 9, 10 or 14, wherein the diglycolamide is tetraethyl-diglycolamide.

16. Method according to any one of claims 1 to 15, wherein the organic phase used in step a) only contains the solvating extractant so that the method comprises all the steps a) to e).

17. Method according to claim 16, which comprises, after step e), a step for separating both extractants.

18. Method according to claim 17, wherein the separation of both extractants is carried out by de-extracting the acid extractant from the organic phase.

19. Method according to claim 17 or claim 18, which comprises, after the step for separating both extractants, a step for purifying the organic phase.

20. Method according to claim 19 depending on claim 18, which comprises, after the step for purifying the organic phase, a step for re-extracting the acid extractant in a fraction of the organic phase.

21. Method according to any one of claims 1 to 15, wherein the organic phase used in step a) contains the solvating extractant and the acid extractant so that the method does not comprise any step c).

22. Method according to claim 21, which comprises, after step e), a step for purifying the organic phase.

23. Method according to any one of the preceding claims, wherein the A1 aqueous phase is a raffinate stemming from the first purification cycle of a PUREX or COEX™ method.
